# EUROPEAN PATENT APPLICATION

(11) **EP 3 279 348 A1**
(43) Date of publication of application: **07.02.2018**
(21) Application number: 16771566.3
(22) Date of filing: 12.01.2016
(51) Int. Cl.: C22C 19/00, B22F 1/00, H01M 4/24, H01M 4/38, H01M 10/30

(54) **ALLOY POWDER FOR ELECTRODES, NEGATIVE ELECTRODE FOR NICKEL-METAL HYDRIDE STORAGE BATTERIES USING SAME, AND NICKEL-METAL HYDRIDE STORAGE BATTERY**

(30) Priority: 31.03.2015 JP 2015070593
(71) Applicant: Panasonic Intellectual Property Management Co., Ltd., Osaka-shi, Osaka 540-6207 (JP)
(72) Inventor: YANAI, Hiroki, Osaka-Shi, Osaka 540-6207 (JP); OKABE, Akiko, Osaka-Shi, Osaka 540-6207 (JP); OHYAMA, Hideaki, Osaka-Shi, Osaka 540-6207 (JP); GOTO, Hiroyuki, Osaka-Shi, Osaka 540-6207 (JP); SUMIYAMA, Shinichi, Osaka-Shi, Osaka 540-6207 (JP)
(74) Representative: Grünecker Patent- und Rechtsanwälte PartG mbB
(86) International application number: PCT/JP2016/000106
(87) International publication number: WO 2016/157669

(57) **Abstract**

A hydrogen-absorbing alloy included in alloy powder for electrodes includes elements L, elements M, Ni, Co, and elements E. Elements L include La as an essential component. Elements L do not include Nd, or, even when elements L include Nd, the percentage of Nd in elements L is 5 mass% or less. Furthermore, elements M include at least Mg, elements E include at least Mn, and molar ratio α₁ of Mg to the sum total of elements L and elements M satisfies 0.000<α₁≤0.050. Molar ratio x of Ni to the sum total of elements L and elements M satisfies 3.50≤x≤4.32, and molar ratio y of Co to the sum total of elements L and elements M satisfies 0.13≤y≤0.50. Molar ratio x, molar ratio y, and molar ratio z of elements E satisfy 4.78≤x+y+z<5.03, and ratio y/β of molar ratio y to molar ratio β that is the ratio of Mn to the sum total of elements L and elements M satisfies 0.80≤y/β≤1.50.

## Description

### TECHNICAL FIELD

The present invention relates to alloy powder for electrodes, a negative electrode for nickel-metal hydride storage batteries using the alloy powder, and a nickel-metal hydride storage battery, and more specifically to improvement of the alloy powder for electrodes using a hydrogen-absorbing alloy.

### BACKGROUND ART

An alkaline storage battery using a negative electrode that includes a hydrogen-absorbing alloy as a negative electrode active material has a high output characteristic and a high durability (for example, life characteristic or storage characteristic). Therefore, such an alkaline storage battery receives attention as an alternative of a dry battery or as a power source of an electric automobile. While, recently, a lithium-ion secondary battery is also used for such an application. Therefore, from the viewpoint of emphasizing the advantage of the alkaline storage battery, it is desired to further improve the battery characteristics such as output characteristic or durability.

As the hydrogen-absorbing alloy, generally, a hydrogen-absorbing alloy mainly having a CaCu₅ type (AB₅ type) crystal structure is employed. The hydrogen-absorbing alloy includes elements of a high hydrogen affinity and elements of a low hydrogen affinity. In the hydrogen-absorbing alloy having an AB₅ type crystal structure, the elements of a high hydrogen affinity are apt to be located in an A site, and the elements of a low hydrogen affinity are apt to be located in a B site.

In order to improve the battery characteristics of an alkaline storage battery, an attempt to optimize the performance of the hydrogen-absorbing alloy powder is made. For example, from the viewpoint of forming grain boundaries of a high corrosion resistance in the hydrogen-absorbing alloy, Patent Literature 1 proposes that the A site is replaced with relatively many alkaline-earth metal elements and the B/A ratio is adjusted. From the viewpoint of increasing the capacity, and suppressing the degradation of the hydrogen-absorbing alloy during charge and discharge, Patent Literature 2 proposes that the percentage of each element in the AB₅ type hydrogen-absorbing alloy is adjusted.

### Citation List

### Patent Literature

**PTL 1:** WO2009/013848
**PTL 2:** WO2014/155950

### SUMMARY OF THE INVENTION

### TECHNICAL PROBLEM(S)

In the hydrogen-absorbing alloy, the elements of a low hydrogen affinity perform a function of preventing a remarkable crystal defect from being caused when the alloy expands or contracts due to the absorption and desorption of hydrogen. While, when the ratio (B/A ratio) of the elements of a low hydrogen affinity to the elements of a high hydrogen affinity increases, the hydrogen absorbing capability decreases. Therefore, it is difficult to increase the discharge capacity.

In Patent Literature 1, the B/A ratio of the hydrogen-absorbing alloy is high, namely 5.6 or more. When the B/A ratio is so high, however, the degradation of the alloy caused by the charge and discharge is easily suppressed but the capacity is difficult to be increased. The metal elements located in the B site are apt to be eluted. In Patent Literature 2, the ratio of Co to Mn is low. Therefore, the Co and Mn are eluted in an electrolytic solution to degrade the alloy, or the re-precipitation of the eluted metal elements causes a degradation of the battery characteristics or causes an internal short circuit. The elution of the metal elements is particularly apt to become remarkable at a high temperature. After the storage at a high temperature, the capacity of the battery can significantly decrease. Therefore, it is important to enhance the high-temperature storage characteristic of the battery.

The objective of the present invention is to provide alloy powder for electrodes useful for obtaining a nickel-metal hydride storage battery that has a high capacity and a high-temperature storage characteristic.

### SOLUTION(S) TO PROBLEM(S)

One aspect of the present invention relates to alloy powder for electrodes including a hydrogen-absorbing alloy. The hydrogen-absorbing alloy includes elements L, elements M, Ni, Co, and elements E. Elements L include at least one element selected from a set consisting of the elements in groups 3 and 4 on the periodic table, and include La as an essential component. Elements L do not include Nd, or, even when elements L include Nd, the percentage of Nd in elements L is 5 mass% or less.

Furthermore, elements M include at least one element selected from a set consisting of Mg, Ca, Sr, and Ba, and include at least Mg. Elements E include at least one element selected from a set consisting of the transition metal elements (except Ni and Co) in groups 5 to 11 on the periodic table; the elements in group 12; and the elements in groups 13 and 14 periods 3 to 5. Elements E include at least Mn.

Furthermore, molar ratio α₁ of Mg to the sum total of elements L and elements M satisfies 0.000<α₁≤0.050, molar ratio x of Ni to the sum total of elements L and elements M satisfies 3.50≤x≤4.32, and molar ratio y of Co to the sum total of elements L and elements M satisfies 0.13≤y≤0.50.

Molar ratio x, molar ratio y, and molar ratio z of elements E to the sum total of elements L and elements M satisfy 4.78≤x+y+z<5.03, and ratio y/β of molar ratio y to molar ratio β that is the ratio of Mn to the sum total of elements L and elements M satisfy 0.80≤y/β≤1.50. The one aspect relates to the alloy powder for electrodes.

Another aspect of the present invention relates to a negative electrode for nickel-metal hydride storage batteries that includes the alloy powder for electrodes as a negative electrode active material.

Yet another aspect of the present invention relates to a nickel-metal hydride storage battery that includes a positive electrode, the negative electrode, a separator interposed between the positive electrode and negative electrode, and an alkaline electrolytic solution.

### ADVANTAGEOUS EFFECT(S) OF INVENTION

In the present invention, a high capacity can be secured by controlling the composition of the hydrogen-absorbing alloy. The high-temperature storage characteristic of the nickel-metal hydride storage battery can be improved by suppressing the degradation of the hydrogen-absorbing alloy during high-temperature storage.

### BRIEF DESCRIPTION OF DRAWINGS

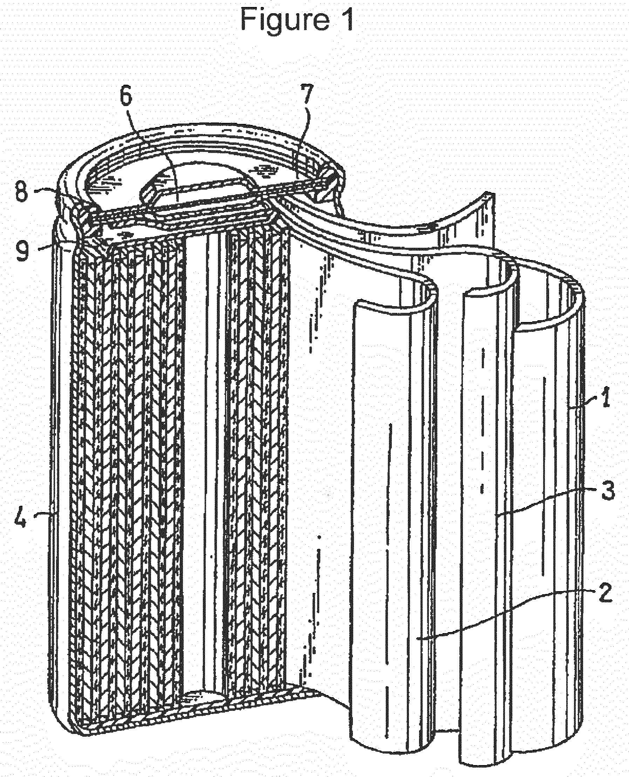

FIG. 1 is a vertical sectional view schematically showing the structure of a nickel-metal hydride storage battery in accordance with an exemplary embodiment of the present invention.

### DESCRIPTION OF EMBODIMENT(S)

### (Alloy powder for electrodes)

An alloy powder for electrodes of an exemplary embodiment of the present invention includes a hydrogen-absorbing alloy. The hydrogen-absorbing alloy includes elements L, elements M, Ni, Co, and elements E. Elements L include at least one element selected from a set consisting of the elements in groups 3 and 4 on the periodic table, and include La as an essential component. Elements L do not include Nd, or even when elements L include Nd, the percentage of Nd in elements L is 5 mass% or less. Elements M include at least one element selected from a set consisting of Mg, Ca, Sr, and Ba, and include at least Mg. Elements E include at least one element selected from a set consisting of: the transition metal elements (except Ni and Co) in groups 5 to 11 on the periodic table; the elements in group 12; and the elements in groups 13 and 14 periods 3 to 5. Elements E include at least Mn.

In the hydrogen-absorbing alloy, molar ratio α₁ of Mg to the sum total of elements L and elements M satisfies 0.000<α₁≤0.050. Molar ratio x of Ni to the sum total of elements L and elements M satisfies 3.50≤x≤4.32. Molar ratio y of Co to the sum total of elements L and elements M satisfies 0.13≤y≤0.50. Molar ratio x, molar ratio y, and molar ratio z of elements E to the sum total of elements L and elements M satisfy 4.78≤x+y+z<5.03. Ratio y/β of molar ratio y to molar ratio β that is the ratio of Mn to the sum total of elements L and elements M satisfies 0.80≤y/β≤1.50.

Regarding the alloy powder for electrodes of the present exemplary embodiment, the hydrogen-absorbing alloy constituting the alloy powder for electrodes includes the above-mentioned elements. Molar ratio x of Ni, molar ratio y of Co, and molar ratio z of elements E to the sum total of elements L and elements M satisfy 4.78≤x+y+z<5.03. The hydrogen-absorbing alloy for which x+y+z is within such a range often has an ABs type crystal structure. In such a hydrogen-absorbing alloy, elements of a high hydrogen affinity are apt to be located in the A site, and elements of a low hydrogen affinity are apt to be located in the B site. Therefore, the value of x+y+z corresponds to the ratio (B/A ratio) of the elements.

When the B/A ratio is increased, the expansion and contraction of the alloy during charge and discharge is suppressed, and hence the degradation of the alloy caused by the charge and discharge is easily suppressed. When the B/A ratio is increased, however, the hydrogen absorbing capability decreases and the capacity is apt to decrease. When the B/A ratio is increased, metal elements such as Co located in the B site are apt to be eluted in an electrolytic solution. The elution of such metal elements degrades the alloy. Furthermore, when the eluted metal elements are precipitated again, the capacity decreases and the electrolytic solution is partially exhausted. The battery degrades and the life characteristic decreases. While the eluted metal elements are precipitated again, segregation is apt to occur. The segregation can decrease the battery characteristic or can cause an internal short circuit. The elution of the metal elements is apt to become remarkable particularly at a high temperature, so that repetition of the charge and discharge at a high temperature decreases the life characteristic (namely, high-temperature life characteristic). Also when the battery is stored at a high temperature, the elution of the metal elements is apt to become remarkable, and hence the battery characteristic (namely, high-temperature storage characteristic) after high-temperature storage decreases and the battery capacity decreases.

When the B/A ratio is decreased, it is considered that the hydrogen absorbing capability increases to allow the increase in capacity. When the B/A ratio is decreased, however, the crystal structure of the hydrogen-absorbing alloy becomes unstable, and hence the alloy is apt to degrade during charge and discharge. As a result, the life characteristic decreases. The elution amount of metal elements such as Mg located in the A site is apt to increase. When the elution amount of such metal elements excessively increases, the battery characteristic is decreased by the degradation of the alloy or the re-precipitation of the metal elements. The elution of such metal elements is also remarkable at a high temperature, so that the high-temperature life characteristic and high-temperature storage characteristic are apt to decrease compared with the case of Co or the like.

In the present exemplary embodiment, molar ratio α₁ of Mg is set to satisfy 0.000<α₁≤0.050, so that a high high-temperature storage characteristic can be obtained while a high capacity is secured. When molar ratio α₁ exceeds 0.050, the hydrogen absorbing capability decreases, an auxiliary phase having a crystal structure other than the AB₅ type crystal structure is apt to be formed, and hence it is difficult to increase the capacity. Furthermore, the metal elements are apt to be eluted from the auxiliary phase, so that the high-temperature storage characteristic and high-temperature life characteristic decrease. When the alloy does not contain Mg, it is difficult to suppress the elution of Co from the alloy, and the high-temperature storage characteristic and high-temperature life characteristic decrease.

When molar ratio y/β of Co to Mn is set to satisfy 0.80≤y/β≤1.50, the occurrence of a micro short circuit can be suppressed even during high-temperature storage. As a result, decrease in capacity can be suppressed, and the high-temperature storage characteristic can be improved. The reason why molar ratio y/β in this range produces such an effect is not clear. However, even when Co is eluted in the electrolytic solution at a high temperature and conductive Co precipitates are produced, insulating Mn precipitates produced by the precipitation of Mn eluted at the same time is considered to suppress the short circuit by the Co precipitates. It is considered that the elution amounts of Co and Mn are controlled in an appropriate balance so that Mn precipitates suppress such a short circuit. When molar ratio y/β is less than 0.80, the distribution of the elements is apt to become inhomogeneous in the hydrogen-absorbing alloy, and an alloy phase (auxiliary phase) that does not contribute to the absorption and desorption of hydrogen is apt to be produced. Therefore, the electrode capacity decreases. Furthermore, the metal elements are apt to be eluted from the auxiliary phase, so that the high-temperature storage characteristic and the high-temperature life characteristic also decrease. When molar ratio y/β exceeds 1.50, the elution of metal elements such as Co is apt to become remarkable, and hence the high-temperature storage characteristic and the high-temperature life characteristic also decrease. Furthermore, it is difficult to suppress the short circuit caused by Co precipitates, so that the electrode capacity also decreases.

The decrease in high-temperature storage characteristic can be suppressed while a high capacity is secured, by adjusting molar ratio x of Ni, molar ratio y of Co, and molar ratio z of elements E so that they satisfy 4.78≤x+y+z<5.03. When the B/A ratio is within such a range, the degradation of the alloy during charge and discharge is suppressed, and hence the life characteristic (especially, high-temperature life characteristic) can be improved. Although the detail is not clear, by combining the B/A ratio in the above-mentioned range, molar ratio α₁ in the above-mentioned range, and molar ratio y/β in the above-mentioned range, the following phenomena are estimated to occur:
the forming of the auxiliary phase is suppressed;
the elution of the metal elements is suppressed; and
the balance between the elution and precipitation of Co and Mn becomes appropriate.
Then, it is estimated that the short circuit caused by precipitates is suppressed, and the degradation of the capacity is suppressed.

The misch metal conventionally used in a hydrogen-absorbing alloy is a rare-earth element mixture, and includes a relatively large amount of Nd. However, of rare-earth elements, the cost of Nd is extremely high. When Nd is used in the hydrogen-absorbing alloy, the battery cost increases. When the content of Nd is high, the hydrogen affinity is apt to decrease, and the capacity of the AB₅ type hydrogen-absorbing alloy is disadvantageously difficult to be increased. In the present exemplary embodiment, elements L do not Nd, or the percentage of Nd in elements L is set at 5 mass% or less. Thus, the Nd percentage in elements L is low, the reduction of the hydrogen-absorbing capability of the alloy is suppressed, and the capacity is easily increased. Depending on the composition of elements L, the distribution of the elements located in the A site can become inhomogeneous, or the thermal or mechanical stability of the hydrogen-absorbing alloy can decrease. In the present invention, by controlling the composition - for example, by setting α₁ ratio, y/β ratio, B/A ratio, and Nd percentage within respective specific ranges -, failures caused by the composition of elements L can be reduced. As a result, the high-temperature storage characteristic and the high-temperature life characteristic can be enhanced.

In the exemplary embodiment of the present invention, a high capacity can be secured by controlling the composition of the hydrogen-absorbing alloy. Even after high-temperature storage, the micro short circuit can be suppressed. Therefore, a high capacity retention rate can be obtained (namely, the high-temperature storage characteristic is high). In other words, the capacity is high, and the high-temperature storage characteristic is high. Furthermore, the elution resistance and corrosion resistance of the constituent elements of the hydrogen-absorbing alloy are improved, so that the degradation of the alloy can be suppressed. Therefore, the life characteristic can be improved even when the charge and discharge are performed at a high temperature, and a high capacity retention rate can be obtained even after high-temperature storage. Thus, in the present exemplary embodiment, the life characteristic (especially, high-temperature life characteristic) can be improved. Therefore, the hydrogen-absorbing alloy is useful for producing a nickel-metal hydride storage battery having a high long-term reliability, and the discharge characteristic can be reconciled, at a high level, with the long-term reliability. The low Nd content can reduce the manufacturing cost of the battery.

In the hydrogen-absorbing alloy, of elements L, the elements in group 3 on the periodic table specifically include Sc, Y, lanthanoid elements, and actinoid elements. The lanthanoid elements include La, Ce, Pr, Nd, Pm, Sm, Eu, Gd, Tb, Dy, Ho, Er, Tm, Yb, and Lu. The actinoid elements include Ac, Th, Pa, and Np, for example. Of elements L, the elements in group 4 on the periodic table include Ti, Zr, and Hf. As elements L, at least one of Sc, Y, lanthanoid elements, Ti, and Zr is preferable, and lanthanoid elements are especially preferable.

Elements L includes La as an essential component. Elements L can include La and elements L¹ other than La. Specifically, elements L¹ include at least one element selected from a set consisting of: the elements in group 3 on the periodic table (except La); and the elements in group 4. The elements in group 3 on the periodic table except La and the elements in group 4 correspond to the above-mentioned elements. As elements L¹, at least one of Sc, Y, lanthanoid elements (except La), Ti, and Zr is preferable, and especially, lanthanoid elements (except La) are preferable. Of lanthanoid elements, at least one element selected from a set consisting of Ce, Pr, and Sm is preferable, and especially, at least one of Pr and Sm is preferable.

The percentage of La in elements L is 60 mass% or more for example, preferably 65 mass% or more, more preferably 68 mass% or more. The percentage of La in elements L is 90 mass% or less for example, preferably 85 mass% or less, more preferably 80 mass% or less or 75 mass% or less. These lower limits and upper limits can be optionally combined. The percentage of La in elements L may be 60 to 90 mass% or 65 to 80 mass%, for example. When the percentage of La in elements L is within such a range, the degradation of the hydrogen-absorbing alloy can be more effectively suppressed, and the capacity is easily increased.

La has a high hydrogen affinity, so that it is considered that increasing the La percentage in the alloy can improve the hydrogen absorbing capability and can increase the capacity. However, La is apt to corrode. From the viewpoint of increasing the capacity, high-temperature storage characteristic, and life characteristic, preferably, the percentage of La in the hydrogen-absorbing alloy is 30 mass% or less for example, preferably 25 mass% or less, or may be 23 mass% or less or 22.5 mass% or less. The percentage of La in the hydrogen-absorbing alloy may be 15 mass% or more for example, preferably 20 mass% or more or 21 mass% or more. These upper limits and lower limits can be optionally combined. The percentage of La in the hydrogen-absorbing alloy may be 15 to 30 mass%, 20 to 23 mass%, or 21 to 22.5 mass%, for example. From the viewpoint of increasing the effect of suppressing the reduction in corrosion resistance of the alloy and the viewpoint of easily suppressing the decrease in the life characteristic and high-temperature storage characteristic, it is preferable that the percentage of La in the hydrogen-absorbing alloy is 23 mass% or less. Thus, by controlling the La percentage in the hydrogen-absorbing alloy and the B/A ratio in an appropriate balance, the degradation in capacity is suppressed. Furthermore, the life characteristic can be effectively improved.

Elements L do not contain Nd, or, even when elements L contain Nd, the percentage of Nd in elements L is 5 mass% or less. The percentage of Nd in elements L is preferably less than 5 mass%, more preferably 3.5 mass% or less or 3 mass% or less. When the content of Nd exceeds 5 mass%, the cost increases, the hydrogen absorbing capability is apt to decrease, and the high-temperature storage characteristic and high-temperature life characteristic decrease.

Elements M include at least one element selected from a set consisting of Mg, Ca, Sr, and Ba. Thanks to such elements M, a hydride having an ion binding property is easily produced, the hydrogen absorbing capability is improved, and hence the capacity can be expected to increase.

Elements M include at least Mg. Mg is apt to attract oxygen molecules and migrate on a surface of the alloy. Therefore, on the surface of the alloy, a corrosive-resistant protective film including at least one of an oxide containing Mg and a hydroxide containing Mg is produced. Although Mg metal is apt to dissolve in an alkaline electrolytic solution, such a protective film is stable, a high discharge characteristic is easily secured, and elution of Co from the alloy is easily suppressed. Therefore, the high-temperature storage characteristic and high-temperature life characteristic are easily increased.

The percentage of Mg in elements M is 70 mass% or more for example, preferably 80 mass% or more, more preferably 90 mass% or more. The percentage of Mg in elements M is 100 mass% or less. It is also preferable that elements M include only Mg (namely, the percentage of Mg in elements M is 100 mass%). It is also preferable that elements M include a combination of Mg and Ca. In this case, the percentage of Mg in elements M may be less than 100 mass%.

In the hydrogen-absorbing alloy, molar ratio α₁ of Mg to the sum total of elements L and elements M satisfies 0.000<α₁≤0.050, may satisfy 0.010≤α₁≤0.050, or may satisfy 0.010≤α₁<0.045 or 0.010≤α₁≤0.040. Molar ratio α₁ may satisfy 0.030≤α₁≤0.050 or 0.030<α₁≤0.050. It is also preferable that molar ratio α₁ satisfies 0.000<α₁≤0.030, and it is also preferable that molar ratio α₁ satisfies 0.000<α₁<0.030 or 0.010≤α₁≤0.025.

In the hydrogen-absorbing alloy, molar ratio α of elements M to the sum total of elements L and elements M satisfies 0.000<α≤0.133 for example, preferably 0.010≤α≤0.133, more preferably 0.010≤α≤0.130. When molar ratio α is within such a range, the corrosion resistance to the alkaline electrolytic solution is easily improved, the reduction in high-temperature storage characteristic can be further suppressed, and the reduction in high-temperature life characteristic is easily suppressed. Furthermore, the reduction in hydrogen absorbing capability is suppressed, so that the capacity is increased and the degradation of the alloy is easily suppressed.

Molar ratio x of Ni to the sum total of elements L and elements M is 3.50 or more, preferably 3.60 or more or 3.80 or more. Molar ratio x is also 4.32 or less, preferably 4.31 or less, more preferably 4.30 or less. These upper limits and lower limits can be optionally combined. For example, molar ratio x may satisfy 3.50≤x≤4.31, 3.60≤x≤4.30, or 3.80≤x≤4.30. When molar ratio x is less than 3.50, the alloy capacity decreases, and hence the high-temperature storage characteristic decreases and the high-temperature life characteristic also decreases. When molar ratio x exceeds 4.32, the corrosion resistance to the alkaline electrolytic solution is apt to decrease, and hence the high-temperature storage characteristic decreases and the high-temperature life characteristic also decreases.

Molar ratio y of Co to the sum total of elements L and elements M is 0.13 or more, preferably 0.15 or more, more preferably 0.25 or more or 0.30 or more. Molar ratio y is 0.50 or less, preferably 0.45 or less, more preferably 0.40 or less or 0.39 or less. These upper limits and lower limits can be optionally combined. For example, molar ratio y may satisfy 0.15≤y≤0.47, 0.25≤y≤0.45, 0.25≤y≤0.40, 0.30≤y≤0.40, or 0.30≤y≤0.39.

When molar ratio y is less than 0.13, the alloy is apt to degrade and hence the electrode capacity decreases. When molar ratio y exceeds 0.50, eluted Co is apt to cause a micro short circuit and hence the electrode capacity is damaged. In these cases, the high-temperature storage characteristic decreases and the high-temperature life characteristic also decreases. In the above-mentioned hydrogen-absorbing alloy including Co at a predetermined percentage, Co enters the B site, and the bonding of Co to elements around it is enhanced. Therefore, when hydrogen is absorbed and desorbed, generation of a crystal defect due to the expansion and contraction of the alloy can be more effectively suppressed. As a result, even when the charge and discharge are repeated, crack of the alloy can be more effectively suppressed and thus deterioration of life can be more effectively suppressed. Although the detail is not clear, when molar ratio y is relatively low, - for example, in a range of 0.40 or less or 0.39 or less -, an appropriate balance between the elution and precipitation of Co and Mn is estimated to be easily obtained on the basis of the relation of molar ratio y to molar ratio α₁ and ratio y/β. Thus, it is also preferable that molar ratio y is within such a range.

Elements E include at least one element selected from a set consisting of the transition metal elements (except Ni and Co) in groups 5 to 11 on the periodic table; the elements in group 12; and the elements in groups 13 and 14 periods 3 to 5. Examples of elements E include: transition metal elements such as V, Nb, Ta, Cr, Mo, W, Mn, Fe, Pd, Cu, and Ag; elements in group 12 such as Zn; elements in group 13 such as Al, Ga, and In; and elements in group 14 such as Si, Ge, and Sn.

Elements E include at least Mn. Thus, the hydrogen equilibrium pressure is easily reduced, and a high hydrogen absorbing capability is obtained. Therefore, a hydrogen-absorbing alloy of a high capacity is obtained.

From the viewpoint of increasing the capacity, preferably, elements E include Mn, or include Mn and at least one element selected from a set consisting of V, Nb, Ta, Cr, Mo, W, Fe, Cu, Ag, Zn, Al, Ga, In, Si, Ge, and Sn. Especially, it is preferable that elements E include Mn, or include Mn and Al. When elements E include Mn and Al, an oxidizing protective film is apt to be produced, and hence the corrosion resistance of the alloy can be improved.

The percentage of Mn in elements E is 50 to 100 mass% for example, preferably 57 to 100 mass%. When elements E include Mn and Al, the total percentage of Mn and Al in elements E is 80 mass% or more for example, preferably 90 mass% or more. The total percentage of Mn and Al in elements E is 100 mass% or less. It is also preferable that elements E include only Mn, or include only Mn and Al.

In order to effectively suppress the generation of a crystal defect during absorption and desorption of hydrogen while improving the hydrogen absorbing capability and corrosion resistance, it is preferable that elements E include both Mn and Al. In this case, the molar ratio (=Mn/Al) of Mn to Al is 0.30/0.70 to 0.70/0.30 for example, preferably 0.35/0.65 to 0.60/0.40, more preferably 0.40/0.60 to 0.50/0.50.

The sum total (x+y+z) of molar ratio x, molar ratio y, and molar ratio z of elements E to the sum total of elements L and elements M corresponds to the B/A ratio. The x+y+z is 4.78 or more, preferably 4.79 or more, more preferably 4.80 or more. Furthermore, x+y+z is less than 5.03, preferably 5.02 or less. These upper limits and lower limits can be optionally combined. For example, x+y+z may satisfy 4.79≤x+y+z<5.03, 4.80≤x+y+z<5.03, or 4.80≤x+y+z≤5.02.

When x+y+z is less than 4.78, the elution amount of elements M such as Mg increases during high-temperature storage. Therefore, the alloy degrades, re-precipitation of elements M disturbs the battery reaction, and the capacity decreases. In other words, the high-temperature storage characteristic decreases. Furthermore, although the initial discharge capacity increases, the crystal structure becomes unstable, hence the degradation of the alloy during charge and discharge becomes remarkable, and the life characteristic also decreases. When x+y+z is 5.03 or more, at least one of elements such as Co and elements E located in the B site is apt to be eluted especially at a high temperature, and the alloy degrades. Furthermore, re-precipitation of the eluted elements disturbs the battery reaction. Therefore, the high-temperature storage characteristic decreases and the high-temperature life characteristic also decreases.

The alloy powder for electrodes can be produced by the following processes, for example:
(i) process A of producing an alloy from simple substances of the constituent elements of a hydrogen-absorbing alloy;
(ii) process B of granulating the alloy obtained in process A; and
(iii) process C of activating the granulated substance obtained in process B.

### (i) Process A (alloying process)

In process A, using a known alloying method for example, an alloy can be produced from raw materials such as simple substances, alloys (alloy containing some elements of the constituent elements), and compounds of the constituent elements. As the alloying method, a plasma arc melting method, a high frequency melting method (metal mold casting method), a mechanical alloying method (machine alloy method), a mechanical milling method, or a rapid solidification method can be employed. The rapid solidification method specifically includes a roll spinning method, a melt drag method, a direct casting and rolling method, a rotating liquid spinning method, a spray forming method, a gas atomizing method, a wet spraying method, a splat method, a rapid-solidification thin strip grinding method, a gas atomization splat method, a melt extraction method, or a rotating electrode method. The rapid solidification methods are described in Metal Material Application Dictionary (Industrial Research Center of Japan, 1999) or the like). These alloying methods may be employed singly or as a combination of two or more.

In process A, by mixing the raw materials containing constituent elements and alloying the obtained mixture in the above-mentioned methods, an alloy can be produced. The constituent elements may be alloyed by melting the mixture by heating. As such an alloying method, for example, the plasma arc melting method, the high frequency melting method (metal mold casting method), and the rapid solidification method are appropriate. For example, the rapid solidification method may be combined with the mechanical alloying method.

In process A, in mixing the raw materials, the molar ratios of the elements contained in the raw materials and the mass percentages of the raw materials are adjusted so that the hydrogen-absorbing alloy has a desired composition.

The molten alloy is solidified prior to the granulation in process B. The solidification of the alloy can be performed by supplying the molten alloy to a mold or the like if necessary, and by cooling it in the mold. From the viewpoint of improving the dispersiblility of the constituent elements in the alloy, supply speed or the like may be adjusted if necessary.

The obtained and solidified alloy (ingot) may be heated if necessary. By the heating, the dispersibility of the constituent elements in the hydrogen-absorbing alloy is easily adjusted, the elution and segregation of the constituent elements can be more effectively suppressed, and the hydrogen-absorbing alloy is easily activated.

The heating is not particularly limited, and can be performed at a temperature of 700 to 1200°C in an atmosphere containing inert gas such as argon.

### (ii) Process B (granulating process)

In process B, the alloy (specifically, ingot) obtained in process A is granulated. The granulation of the alloy can be performed by wet crushing or dry crushing, or these methods may be combined together. The crushing can be performed using a ball mill or the like. In the wet crushing, the ingot is crushed using a liquid medium such as water. Obtained particles may be classified if necessary.

The average particle diameter of the obtained alloy particles is 5 to 50 µm for example, preferably 5 to 30 µm. When the average particle diameter is within such a range, the surface area of the hydrogen-absorbing alloy can be kept within an appropriate range, reduction in corrosion resistance can be more effectively suppressed, and reduction in hydrogen absorbing reaction can be suppressed. In the present description, the average particle diameter means the median diameter (D₅₀) in the particle size distribution of the volume reference.

The alloy particles obtained in process B are sometimes referred to as "raw powder" of the alloy powder for electrodes.

### (iii) Process C (activating process)

In process C, a crushed product (raw powder) can be activated by bringing the crushed product into contact with an alkaline aqueous solution. The method of bringing the raw powder into contact with the alkaline aqueous solution is not particularly limited. For example, the following process may be employed:
the raw powder is immersed in the alkaline aqueous solution;
the raw powder is added to the alkaline aqueous solution and they are stirred; or
the alkaline aqueous solution is sprayed to the raw powder.
The activation may be performed in the heating state, if necessary.

As the alkaline aqueous solution, an aqueous solution that contains an alkali metal hydroxide or the like as an alkaline component can be employed. The alkali metal hydroxide is, for example, potassium hydroxide, sodium hydroxide, or lithium hydroxide. Among them, preferably, sodium hydroxide or potassium hydroxide is used.

From the viewpoint of the efficiency of activation, the productivity, and the reproducibility of the process, the alkali concentration in the alkaline aqueous solution is 5 to 50 mass% for example, preferably 10 to 45 mass%.

After the activation treatment by the alkaline aqueous solution, the obtained alloy powder may be washed with water. In order to reduce the remaining of impurities on the surface of the alloy powder, it is preferable that the wash with water is finished after the pH of the water used for the wash becomes 9 or less.

The alloy powder after the activation treatment is normally dried.

The alloy powder for electrodes in accordance with the exemplary embodiment of the present invention can be obtained through these processes. The obtained alloy powder can increase the capacity of the electrode, or the battery, and can reconcile the life characteristic such as a high-temperature life characteristic of the battery with the high-temperature storage characteristic. Therefore, the alloy powder for electrodes in accordance with the exemplary embodiment is appropriate for use as a negative electrode active material of a nickel-metal hydride storage battery.

### (Nickel-metal hydride storage battery)

A nickel-metal hydride storage battery includes a positive electrode, a negative electrode, a separator interposed between the positive electrode and negative electrode, and an alkaline electrolytic solution.

The negative electrode includes the above-mentioned alloy powder for electrodes as the negative electrode active material.

The configuration of the nickel-metal hydride storage battery is described hereinafter with reference to FIG. 1. FIG. 1 is a vertical sectional view schematically showing the structure of a nickel-metal hydride storage battery in accordance with the exemplary embodiment of the present invention. The nickel-metal hydride storage battery includes bottomed cylindrical battery case 4 serving also as a negative electrode terminal, an electrode group stored in battery case 4, and an alkaline electrolytic solution (not shown). In the electrode group, negative electrode 1, positive electrode 2, and separator 3 interposed between them are wound spirally. Sealing plate 7 having safety valve 6 is disposed in an opening in battery case 4 via insulating gasket 8. By caulking the opening end of battery case 4 inward, the nickel-metal hydride storage battery is sealed. Sealing plate 7 serves also as a positive electrode terminal, and is electrically connected to positive electrode 2 via positive electrode lead 9.

Such a nickel-metal hydride storage battery can be obtained by storing the electrode group in battery case 4, injecting the alkaline electrolytic solution, placing sealing plate 7 in the opening in battery case 4 via insulating gasket 8, and caulking and sealing the opening end of battery case 4. At this time, negative electrode 1 of the electrode group is electrically connected to battery case 4 via a negative-electrode current collector disposed between the electrode group and the inner bottom of battery case 4. Positive electrode 2 of the electrode group is electrically connected to sealing plate 7 via positive electrode lead 9.

Next, the components of a nickel-metal hydride storage battery are more specifically described.

### (Negative electrode)

The negative electrode is not particularly limited as long as it includes the above-mentioned alloy powder for electrodes as the negative electrode active material. As another component, a known component used in a nickel-metal hydride storage battery can be employed.

The negative electrode may include a core member, and a negative electrode active material adhering to the core member. Such a negative electrode can be formed by applying, to the core member, a negative electrode paste including at least a negative electrode active material.

As the negative electrode core member, a known member can be employed. The negative electrode core member can be exemplified by a porous or imperforate substrate made of a stainless steel, nickel, or an alloy of them. When the core member is a porous substrate, an active material may be filled in a hole of the core member.

The negative electrode paste normally includes a dispersion medium. If necessary, a known component - for example, a conductive agent, binder, or thickener - used for the negative electrode may be added to the negative electrode paste.

The negative electrode, for example, can be formed by applying the negative electrode paste to the core member, then removing the dispersion medium through drying, and compressing (or rolling) them.

As the dispersion medium, a known medium such as water, an organic medium, or a mixed medium of them can be employed.

The conductive agent is not particularly limited as long as it is an electronically conductive material. Examples of the conductive agent include: graphite (natural graphite or artificial graphite); carbon black; conductive fiber; and an organic conductive material.

The amount of the conductive agent to 100 pts.mass of alloy powder for electrodes is 0.01 to 50 pts.mass for example, preferably 0.1 to 30 pts.mass.

The conductive agent may be added to the negative electrode paste, or may be used as a mixture with another component. The conductive agent may be previously applied to the surface of the alloy powder for electrodes.

The binder is made of a resin material. Examples of the resin material include: a rubber material such as styrene-butadiene copolymer rubber (SBR); a polyolefin resin; a fluorine resin such as polyvinylidene fluoride; and an acrylic resin (its Na ion crosslinked polymer).

The amount of the binder to 100 pts.mass of alloy powder for electrodes is 0.01 to 10 pts.mass for example, preferably 0.05 to 5 pts.mass.

Examples of the thickener include: a cellulose derivative such as carboxymethyl cellulose (CMC) or modified CMC (including salt such as Na salt); polyvinyl alcohol; and polyethylene oxide.

The amount of the thickener to 100 pts.mass of alloy powder for electrodes is 0.01 to 10 pts.mass for example, preferably 0.05 to 5 pts.mass.

### (Positive electrode)

The positive electrode may include a core member, and an active material or active material layer adhering to the core member. The positive electrode may be an electrode formed by sintering active material powder.

The positive electrode can be formed by applying, to the core member, a positive electrode paste that includes at least a positive electrode active material, for example. More specifically, the positive electrode can be formed by applying the positive electrode paste to the core member, then removing the dispersion medium through drying, and compressing (or rolling) them.

As the positive electrode core member, a known member can be employed. The positive electrode core member can be exemplified by a porous substrate made of a nickel foam and a nickel or nickel alloy such as a sintered nickel plate.

As the positive electrode active material, for example, a nickel compound such as nickel hydroxide or nickel oxyhydroxide is employed.

The positive electrode paste normally includes a dispersion medium. If necessary, a known component - for example, a conductive agent, binder, or thickener - used for the positive electrode may be added to the positive electrode paste. The dispersion medium, the conductive agent, the binder, the thickener, and their amounts can be selected from the materials and ranges similar to those in the case of the negative electrode paste. As the conductive agent, a conductive cobalt oxide such as cobalt hydroxide or cobalt γ-oxyhydroxide may be employed. The positive electrode paste may include, as an additive, a metal compound (oxide or hydroxide) such as zinc oxide or zinc hydroxide.

### (Separator)

As a separator, a known material - for example, a microporous film, a non-woven fabric, or a laminated body of them - used for a nickel-metal hydride storage battery can be employed. Examples of the material of the microporous film or non-woven fabric can include: a polyolefin resin such as polyethylene or polypropylene; a fluorine resin; and a polyamide resin. Considering that a polyolefin resin has a high degradation resistance to the alkaline electrolytic solution, it is preferable to employ a separator made of the polyolefin resin.

Preferably, through a hydrophilic treatment, a hydrophilic group is previously introduced to the separator made of a material such as a polyolefin resin having a high hydrophobicity. As an example of the hydrophilic treatment, a corona discharge treatment, a plasma treatment, or a sulfonation treatment can be employed. To the separator, one of these hydrophilic treatments may be applied, or a combination of two or more may be applied.

Preferably, at least a part of the separator is sulphonated. The sulfonation degree of the separator (resin-made separator or the like) is 1×10⁻³ to 4.3×10⁻³ for example, preferably 1.5×10⁻³ to 4.1×10⁻³. The sulfonation degree of the separator (resin-made separator or the like) is indicated by the ratio of sulfur atoms to carbon atoms included in the separator.

In the separator having undergone the hydrophilic treatment such as the sulfonation treatment, even when metal components (metal elements located in the B site) such as Co or elements E (Mn or the like) are eluted by the interaction between elements M (Mg or the like) eluted from the alloy and a hydrophilic group introduced to the separator, these metal components can be captured and inactivated. Therefore, the phenomenon in which precipitation of the eluted metal component causes a micro short circuit or decreases the self-discharge characteristic is easily suppressed. Thus, the long-term reliability of the battery can be improved and a high self-discharge characteristic can be secured for a long time.

The thickness of the separator can be appropriately selected from the range of 10 to 300 µm, for example. The thickness may be in the range of 15 to 200 µm, for example.

Preferably, the separator has a non-woven fabric structure. The separator having a non-woven fabric structure can be exemplified by a non-woven fabric, or a laminated body of a non-woven fabric and microporous film.

### (Alkaline electrolytic solution)

As the alkaline electrolytic solution, for example, an aqueous solution containing an alkaline component (alkaline electrolyte) is employed. As an example of the alkaline component, an alkali metal hydroxide - for example, lithium hydroxide, potassium hydroxide, or sodium hydroxide - can be employed. These compounds can be used singly or as a combination of two or more.

From the viewpoint of suppressing the self-decomposition of the positive electrode active material and easily suppressing the self-discharge, preferably, the alkaline electrolytic solution includes at least sodium hydroxide as an alkaline component. The alkaline electrolytic solution may include at least one compound selected from a set consisting of sodium hydroxide, potassium hydroxide, and lithium hydroxide.

From the viewpoint of a high-temperature storage characteristic and a high-temperature life characteristic, the concentration of sodium hydroxide in the alkaline electrolytic solution may be 9.5 to 40 mass%, for example.

When the alkaline electrolytic solution includes potassium hydroxide, the ion conductivity of the electrolytic solution is easily increased and the output is easily increased. The concentration of the potassium hydroxide in the alkaline electrolytic solution may be 0.1 to 40.4 mass%, for example.

When the alkaline electrolytic solution includes lithium hydroxide, the oxygen overvoltage is easily increased. When the alkaline electrolytic solution includes lithium hydroxide, from the viewpoint of securing a high ion conductivity of the alkaline electrolytic solution, the concentration of the lithium hydroxide in the alkaline electrolytic solution may be 0.1 to 1 mass%, for example.

The specific gravity of the alkaline electrolytic solution is 1.03 to 1.55 for example, preferably 1.11 to 1.32.

### EXAMPLE

Hereinafter, the present invention is specifically described on the basis of examples and comparative examples. The present invention is not limited to the following examples.

### Example 1

### (1) Production of raw powder

The simple substances of La, Ce, Mg, Ni, Co, Mn, and Al are mixed at percentages at which a hydrogen-absorbing alloy has a composition shown in Table 1, and are molten by a high-frequency melting furnace. The molten metal is poured (supplied) into a mold at 2 m/min, thereby producing an ingot. The produced ingot is heated at 1060°C in an argon atmosphere for 10 hours. The heated ingot is crushed into coarse particles. The obtained coarse particles are crushed in the presence of water using a wet ball mill, and are passed through a sieve having a mesh size of 75 µm in a wet state, thereby producing raw powder including hydrogen-absorbing alloys having an average particle diameter of 20 µm.

### (2) Production of alloy powder for electrodes

The raw powder obtained in process (1) is mixed with an alkaline aqueous solution of a temperature of 100°C that contains sodium hydroxide at a concentration of 40 mass%, and they are continuously stirred for 50 minutes. The obtained powder is collected, washed with hot water, dehydrated, and then dried. The washing is continued until the pH of the hot water after use becomes 9 or less. As a result, alloy powder for electrodes from which impurities have been removed is obtained.

### (3) Production of negative electrode

To 100 pts.mass of alloy powder for electrodes obtained in process (2), 0.15 pts.mass of CMC (degree of etherification of 0.7, and degree of polymerization of 1600), 0.3 pts.mass of acetylene black, and 0.7 pts.mass of SBR are added, and further water is added. They are kneaded to prepare an electrode paste. The obtained electrode paste is applied to both surfaces of a core member that is made of an iron punching metal plated with nickel (thickness of 60 µm, hole diameter of 1 mm, and open area percentage of 42%). The applied paste is dried, and then pressed together with the core member by a roller. Thus, a negative electrode of a thickness of 0.4 mm, a width of 35 mm, and a capacity of 2200 mAh is obtained.

An exposed portion of the core member is disposed at one end of the negative electrode along the longitudinal direction.

### (4) Production of positive electrode

A sintered positive electrode of a capacity of 1500 mAh is obtained by filling nickel hydroxide into a porous sintered substrate as a positive electrode core member. As a positive electrode active material, about 90 pts.mass of Ni(OH)₂ is employed. To the positive electrode active material, about 6 pts.mass of Zn(OH)₂ is added as an additive, and about 4 pts.mass of Co(OH)₂ is added as a conductive material. An exposed portion of the core member having no active material is disposed at one end of the positive electrode core member along the longitudinal direction.

### (5) Production of nickel-metal hydride storage battery

A nickel-metal hydride storage battery of 4/5A size with a nominal capacity of 1500 mAh shown in FIG. 1 is produced using the negative electrode and positive electrode that are obtained in the above-mentioned method. Specifically, negative electrode 1 and positive electrode 2 are wound via separator 3 to produce a cylindrical electrode group. In the electrode group, the exposed portion of the positive electrode core member having no positive electrode mixture and the exposed portion of the negative electrode core member having no negative electrode mixture are exposed on the opposite end surfaces. As separator 3, non-woven fabric (thickness of 100 µm, mass per unit area of 50 g/cm², and sulfonation degree of 1.90×10⁻³) made of sulfonated polypropylene is employed. A positive electrode current collector is welded to the end surface of the electrode group on which the positive electrode core member is exposed. A negative electrode current collector is welded to the end surface of the electrode group on which the negative electrode core member is exposed.

Sealing plate 7 is electrically connected to the positive electrode current collector via positive electrode lead 9. Then, the electrode group is stored in battery case 4 formed of a cylindrical bottomed-can in the state where the negative electrode current collector is disposed on the downside. The negative electrode lead connected to the negative electrode current collector is welded to the bottom of battery case 4. The electrolytic solution is injected into battery case 4, and then the opening of battery case 4 is sealed with sealing plate 7 having gasket 8 on its periphery. Thus, the nickel-metal hydride storage battery (battery A) is completed.

In the electrolytic solution, as an alkaline component, an alkaline aqueous solution (specific gravity: 1.23) that contains sodium hydroxide by 31 mass%, potassium hydroxide by 1 mass%, and lithium hydroxide by 0.5 mass% is employed.

### (6) Evaluation

The alloy powder for electrodes and nickel-metal hydride storage battery that are obtained in the above-mentioned manner is evaluated as below.

### (a) High-temperature storage characteristic

The nickel-metal hydride storage battery is charged at 20°C at a current value of 0.15 A until the capacity becomes 160% of the theoretical capacity, then is discharged at 20°C at a current value of 0.3 A until the battery voltage decreases to 1.0 V. The capacity (initial discharge capacity) at this time is measured.

Furthermore, the nickel-metal hydride storage battery is charged at 20°C at a current value of 0.15 A until the capacity becomes 160% of the theoretical capacity, then is stored at 45°C for two weeks. After the storage, the nickel-metal hydride storage battery is discharged at 20°C at a current value of 0.3 A until the battery voltage decreases to 1.0 V. The capacity (storage remaining discharge capacity) at this time is measured.

The storage remaining discharge capacity is divided by the initial discharge capacity and is expressed in percentage, and this resultant value is used as an index of the high-temperature storage characteristic.

### (b) High-temperature life characteristic

The nickel-metal hydride storage battery is charged at 40°C at 10 hour rate (150 mA) for 15 hours, and is discharged at 5 hour rate (300 mA) until the battery voltage decreases to 1.0 V. This charge/discharge cycle is repeated 100 times. The ratio of the discharge capacity in the 100th cycle to the discharge capacity in the second cycle is calculated as a capacity retention rate in percentage. The resultant value is used as an index of the high-temperature life characteristic.

### Examples 2 to 9 and comparative examples 1 to 7

Raw powder is produced as in example 1 except that, in process (1) of example 1, the simple substances of the elements constituting a hydrogen-absorbing alloy are mixed at the percentages at which the hydrogen-absorbing alloy has the composition shown in Table 1. Alloy powder for electrodes and a nickel-metal hydride storage battery (batteries A2 to A9 and batteries B1 to B7) are produced and evaluated as in example 1 except that the produced raw powder is used.

The evaluation results of the examples and the comparative examples are shown together with the compositions of the hydrogen-absorbing alloys in Table 1. Here, batteries A1 to A9 correspond to batteries in the examples, and batteries B1 to B7 correspond to batteries in the comparative examples.

**[Table 1]**

| | L_{1-α1}Mg_{α1}NiₓCo_{y}E_{z} | | | | | | | | | | High-temperature storage characteristic (%) | High-temperature life characteristic (%) |
|---|---|---|---|---|---|---|---|---|---|---|---|---|
| | L(Molar ratio) | | | | α₁ | x | y | E(Mn/Al) (Molar ratio) | x+y+z | y/*β* | | |
| | La | Ce | Nd | Pr | | | | | | | | |
| A1 | 0.677 | 0.289 | 0. | 0. | 0.030 | 4.048 | 0.319 | 43.7 / 56.3 | 5.022 | 1.104 | 78 | 95 |
| A2 | 0.700 | 0.260 | 0. | 0. | 0.040 | 4.010 | 0.320 | 45.1 / 54.9 | 5.007 | 1.049 | 75 | 98 |
| A3 | 0.740 | 0.220 | 0. | 0. | 0.050 | 4.040 | 0.320 | 43.1 / 56.9 | 5.014 | 1.135 | 72 | 94 |
| A4 | 0.690 | 0.300 | 0. | 0. | 0.010 | 4.010 | 0.320 | 43.8 / 56.2 | 4.992 | 1.103 | 71 | 90 |
| A5 | 0.688 | 0.297 | 0. | 0. | 0.015 | 3.980 | 0.317 | 43.7 / 56.3 | 4.954 | 1.105 | 70 | 92 |
| A6 | 0.685 | 0.295 | 0. | 0. | 0.020 | 3.957 | 0.316 | 43.7 / 56.3 | 4.927 | 1.105 | 73 | 91 |
| A7 | 0.680 | 0.290 | 0. | 0. | 0.030 | 4.040 | 0.300 | 44.6 / 55.4 | 5.012 | 1.000 | 68 | 88 |
| A8 | 0.680 | 0.290 | 0. | 0. | 0.030 | 4.006 | 0.383 | 43.5 / 56.5 | 5.019 | 1.398 | 69 | 85 |
| A9 | 0.644 | 0.276 | 0.050 | 0. | 0.030 | 4.040 | 0.320 | 43.8 / 56.2 | 5.022 | 1.103 | 62 | 80 |
| B1 | 0.690 | 0.280 | 0. | 0. | 0.030 | 3.935 | 0.319 | 52.5 / 47.5 | 5.037 | 0.776 | 53 | 65 |
| B2 | 0.680 | 0.290 | 0. | 0. | 0.030 | 4.198 | 0.283 | 31.0 / 69.0 | 5.020 | 1.695 | 45 | 67 |
| B3 | 0.330 | 0.480 | 0.140 | 0.050 | 0. | 3.550 | 0.750 | 57.1 / 42.9 | 5.000 | 1.875 | 32 | 58 |
| B4 | 0.680 | 0.320 | 0. | 0. | 0. | 3.991 | 0.319 | 43.7 / 56.3 | 4.971 | 1.104 | 43 | 65 |
| B5 | 0.660 | 0.280 | 0. | 0. | 0.060 | 4.049 | 0.316 | 43.8 / 56.3 | 5.021 | 1.101 | 48 | 63 |
| B6 | 0.650 | 0.310 | 0. | 0. | 0.030 | 3.808 | 0.307 | 43.7 / 56.3 | 4.751 | 1.104 | 53 | 66 |
| B7 | 0.690 | 0.280 | 0. | 0. | 0.030 | 4.288 | 0.331 | 43.8 / 56.2 | 5.304 | 1.103 | 55 | 64 |

As shown in Table 1, the batteries in the examples of group A have a high high-temperature storage characteristic, and also have a high high-temperature life characteristic. While, in the batteries in the comparative examples of group B, both the high-temperature storage characteristic and high-temperature life characteristic are remarkably lower than those in the examples.

### INDUSTRIAL APPLICABILITY

The present invention can provide alloy powder for electrodes that secures a high capacity and improves the high-temperature storage characteristic in a nickel-metal hydride storage battery. Such alloy powder for electrodes can exhibit a high battery characteristic even when it is used at a high temperature. Therefore, the nickel-metal hydride storage battery is expected to be used as an alternative of a dry battery and as a power source for various apparatuses, and can be expected to be used as a power source for a hybrid automobile or the like in a severe environment.

### REFERENCE MARKS IN THE DRAWINGS

- 1: negative electrode
- 2: positive electrode
- 3: separator
- 4: battery case
- 6: safety valve
- 7: sealing plate
- 8: insulating gasket
- 9: positive electrode lead

## Claims

1. Alloy powder for electrodes, comprising
a hydrogen-absorbing alloy,
wherein
the hydrogen-absorbing alloy includes elements L, elements M, Ni, Co, and elements E,
the elements L include at least one element selected from a set consisting of elements in groups 3 and 4 on a periodic table, and include La as an essential component,
the elements L do not include Nd, or, even when the elements L include Nd, a percentage of Nd in the elements L is 5 mass% or less,
the elements M include at least one element selected from a set consisting of Mg, Ca, Sr, and Ba, and include at least Mg,
the elements E include at least one element selected from a set consisting of:
transition metal elements (except Ni and Co) in groups 5 to 11 on the periodic table;
elements in group 12; and
elements in groups 13 and 14 periods 3 to 5, and
the elements E include at least Mn,
a molar ratio α₁ of Mg to a sum total of the elements L and the elements M satisfies 0.000<α₁≤0.050,
a molar ratio x of Ni to the sum total of the elements L and the elements M satisfies 3.50≤x≤4.32,
a molar ratio y of Co to the sum total of the elements L and the elements M satisfies 0.13≤y≤0.50,
the molar ratio x, the molar ratio y, and a molar ratio z of the elements E to the sum total of the elements L and the elements M satisfy 4.78≤x+y+z<5.03, and
a ratio y/β of the molar ratio y to a molar ratio β satisfies 0.80≤y/β≤1.50, the molar ratio β being a ratio of Mn to the sum total of the elements L and the elements M.

2. The alloy powder for electrodes according to claim 1, wherein
the ratio y/β satisfies 1.00<y/β<1.43.

3. The alloy powder for electrodes according to claim 1 or 2, wherein
the ratio y/β satisfies 1.02≤y/β≤1.15.

4. The alloy powder for electrodes according to any one of claims 1 to 3, wherein
a molar ratio α of the elements M to the sum total of the elements L and the elements M satisfies 0.000<α≤0.133.

5. The alloy powder for electrodes according to any one of claims 1 to 3, wherein
the molar ratio α₁ satisfies 0.010≤α₁≤0.040.

6. The alloy powder for electrodes according to any one of claims 1 to 5, wherein
the elements L include a lanthanoid element.

7. The alloy powder for electrodes according to any one of claims 1 to 6, wherein
a molar ratio α of the elements M to the sum total of the elements L and the elements M satisfies 0.010≤α≤0.130,
the molar ratio x satisfies 3.60≤x≤4.30,
the molar ratio y satisfies 0.15≤y≤0.45, and
the molar ratio x, the molar ratio y, and the molar ratio z satisfy 4.80≤x+y+z<5.03.

8. The alloy powder for electrodes according to any one of claims 1 to 7, wherein
the elements E include Mn, or include Mn and at least one element selected from a set consisting of V, Nb, Ta, Cr, Mo, W, Fe, Cu, Ag, Zn, Al, Ga, In, Si, Ge, and Sn.

9. The alloy powder for electrodes according to any one of claims 1 to 8, wherein
the elements E include Mn, or include Mn and Al.

10. A negative electrode for nickel-metal hydride storage batteries, the negative electrode comprising, as a negative electrode active material, the alloy powder for electrodes according to any one of claims 1 to 9.

11. A nickel-metal hydride storage battery comprising:
a positive electrode;
the negative electrode according to claim 10;
a separator interposed between the positive electrode and the negative electrode; and
an alkaline electrolytic solution.
